# EUROPEAN PATENT APPLICATION

(11) **EP 4 240 075 A1**
(43) Date of publication of application: **06.09.2023**
(21) Application number: 20959832.5
(22) Date of filing: 29.10.2020
(51) Int. Cl.: H04W 72/02, H04W 92/18, H04W 76/14

(54) **TERMINAL AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); NAGATA, Satoshi, Tokyo 100-6150 (JP)
(74) Representative: Hoffmann Eitle
(86) International application number: PCT/JP2020/040725
(87) International publication number: WO 2022/091314

(57) **Abstract**

A terminal includes: a reception unit configured to receive information on resource reservation in a sensing window; a control unit configured to exclude a resource from a set of resource candidates based on RSRP (Reference Signal Received Power) when receiving the information on resource reservation and a priority included in the information on resource reservation, and to select a resource to be used for transmission from the set of resource candidates after a resource is excluded; and a transmission unit configured to perform transmission to another terminal using the selected resource, wherein the control unit is configured to further exclude a resource from the set of the resource candidates or to select a resource to be used for transmission from the set of resource candidates, based on information on uplink transmission.

## Description

### [FIELD OF THE INVENTION]

The present invention relates to a terminal and a communication method in a wireless communication system.

### [BACKGROUND OF THE INVENTION]

In LTE (Long Term Evolution) and LTE successor systems (e.g., LTE-A (LTE Advanced), NR (New Radio) (also referred to as 5G)), a D2D (Device to Device) technology in which terminals communicate directly with each other without using base station is being discussed (e.g., Non-Patent Document 1).

The D2D reduces traffic between the terminals and the base stations and enables communication between the terminals even when the base stations are unable to communicate during a disaster, etc. Although the 3GPP (3rd Generation Partnership Project) refers to D2D as a "sidelink," the more generic term D2D is used herein. However, in the description of embodiments described below, the sidelink is also used as needed.

The D2D communication is broadly classified into D2D discovery for discovering other terminals capable of communication, and D2D communication (D2D direct communication, D2D communication, direct communication between terminals, etc.,) for communicating directly between terminals. Hereinafter, when D2D communication and D2D discovery are not specifically distinguished, it is simply called D2D. A signal sent and received by D2D is called a D2D signal. Various use cases of V2X (Vehicle to Everything) services in NR have been discussed (e.g., Non-Patent Document 2) .

### [Citation List]

### [Non-Patent Documents]

[Non-Patent Document 1] 3GPP TS 38.211 16.2.0(2020-06)
[Non-Patent Document 2] 3GPP TR 22.886 V15.1.0 (2017-03)

### SUMMARY OF THE INVENTION

### [TECHNICAL PROBLEM]

To enhance the NR sidelink, power saving is considered. For example, in Resource allocation mode 2, in which the terminal autonomously selects resources, the terminal performs partial sensing to sense the limited resources in a sensing window and, based on the result, selects available resource candidates from the resource selection window.

Here, in resource allocation mode 2, when sidelink transmission and uplink transmission overlap in a time domain, reliability or delay performance of sidelink transmission may be degraded, although processing pertaining to drop or transmission power limitation is executed depending on the priority of each transmission.

The present invention has been made in view of the above-described point, it is an object of the present invention to improve reliability of communication during autonomous resource selection in direct communication between terminals.

### [SOLUTION TO PROBLEM]

According to the disclosed technology, a terminal includes:
a reception unit configured to receive information on resource reservation in a sensing window;
a control unit configured to exclude a resource from a set of resource candidates based on RSRP (Reference Signal Received Power) when receiving the information on resource reservation and a priority included in the information on resource reservation, and to select a resource to be used for transmission from the set of resource candidates after a resource is excluded; and
a transmission unit configured to perform transmission to another terminal using the selected resource,
wherein the control unit is configured to further exclude a resource from the set of the resource candidates or to select a resource to be used for transmission from the set of resource candidates, based on information on uplink transmission.

### [ADVANTAGEOUS EFFECTS OF INVENTION]

According to the disclosed technology, in direct communication between terminals, reliability of communication can be improved during autonomous resource selection.

### BRIEF DESCRIPTION OF THE DRAWINGS

[Fig. 1] Fig. 1 is a diagram illustrating V2X.
[Fig. 2] Fig. 2 is a diagram illustrating an example (1) of a V2X transmission mode.
[Fig. 3] Fig. 3 is a diagram illustrating an example (2) of a V2X transmission mode.
[Fig. 4] Fig. 4 is a diagram illustrating an example (3) of a V2X transmission mode.
[Fig. 5] Fig. 5 is a diagram illustrating an example (4) of a V2X transmission mode.
[Fig. 6] Fig. 6 is a diagram illustrating an example (5) of a V2X transmission mode.
[Fig. 7] Fig. 7 is a diagram illustrating an example (1) of a V2X communication type.
[Fig. 8] Fig. 8 is a diagram illustrating an example (2) of a V2X communication type.
[Fig. 9] Fig. 9 is a diagram illustrating an example (3) of a V2X communication type.
[Fig. 10] Fig. 10 is a sequence diagram illustrating an example (1) V2X operation.
[Fig. 11] Fig. 11 is a sequence diagram illustrating an example (2) of V2X operation.
[Fig. 12] Fig. 12 is a sequence diagram illustrating an example (3) of V2X operation.
[Fig. 13] Fig. 13 is a sequence diagram illustrating an example (4) of V2X operation.
[Fig. 14] Fig. 14 is a diagram illustrating an example of sensing operation.
[Fig. 15] Fig. 15 is a flowchart illustrating an example of preemption operation.
[Fig. 16] Fig. 16 is a diagram illustrating an example of preemption operation.
[Fig. 17] Fig. 17 is a diagram illustrating an example (1) of communication status in an embodiment of the present invention.
[Fig. 18] Fig. 18 is a diagram illustrating an example (2) of communication status in an embodiment of the present invention.
[Fig. 19] Fig. 19 is a diagram illustrating an example (3) of communication status in an embodiment of the present invention.
[Fig. 20] Fig. 20 is a diagram illustrating an example of resource assignment according to an embodiment of the present invention.
[Fig. 21] Fig. 21 is a flowchart illustrating an example (1) of resource selection according to an embodiment of the present invention.
[Fig. 22] Fig. 22 is a flowchart illustrating an example (2) of resource selection according to an embodiment of the present invention.
[Fig. 23] Fig. 23 is a flowchart illustrating an example (3) of resource selection according to an embodiment of the present invention.
[Fig. 24] Fig. 24 is a flowchart illustrating an example (4) of resource selection according to an embodiment of the present invention.
[Fig. 25] Fig. 25 is a diagram illustrating an example of a functional configuration of a base station 10 according to an embodiment of the present invention.
[Fig. 26] Fig. 26 is a diagram illustrating an example of a functional configuration of a terminal 20 according to an embodiment of the present invention.

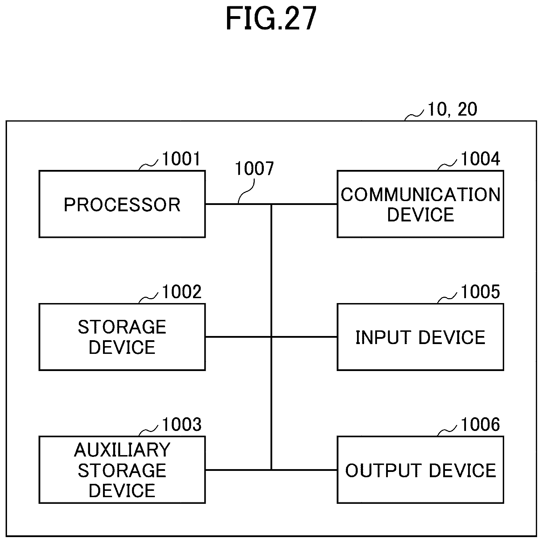

[Fig. 27] Fig. 27 is a diagram illustrating an example of a hardware configuration of a base station 10 or a terminal 20 according to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

Furthermore, according to an embodiment of the present invention, the duplex method may be TDD (Time Division Duplex), FDD (Frequency Division Duplex), or other methods (e.g., Flexible Duplex, or the like).

According to an embodiment of the present invention, the expression, radio (wireless) parameters are "configured (set)" may mean that a predetermined value is pre-configured (pre-set), or may mean that a radio parameter indicated by the base station 10 or the terminal 20 is configured.

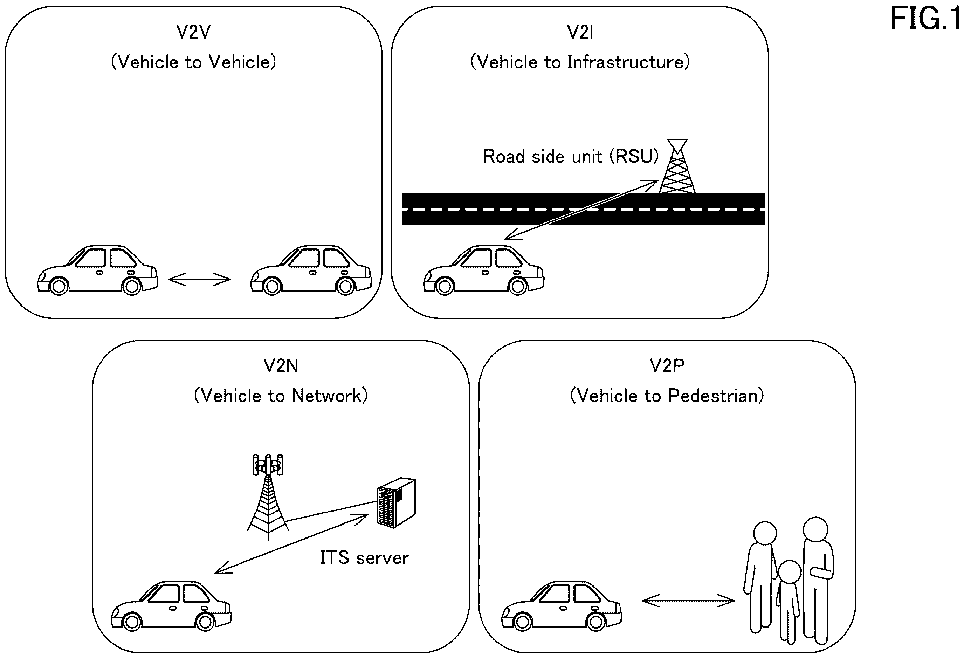

Fig. 1 is a diagram illustrating V2X. In 3GPP, enhancing D2D functions to realize V2X (Vehicle to Everything) or eV2X (enhanced V2x) has been discussed and specifications are being developed. As illustrated in Fig. 1, V2X is a part of ITS (Intelligent Transport Systems) and is a generic name (collective name) for: V2V (Vehicle to Vehicle) referring to a form of communication performed between vehicles; V2I (Vehicle to Infrastructure) referring to a form of communication performed between a vehicle and a road-side unit (RSU) that is installed on roadside; V2N (Vehicle to Network) referring to a form of communication performed between a vehicle and an ITS server; and V2P (Vehicle to Pedestrian) referring to a form of communication performed between a vehicle and a mobile terminal that is held by a pedestrian.

Further, in 3GPP, V2X using LTE/NR's cellular communication and communication between terminals has been discussed. V2X using cellular communication may be referred to as cellular V2X. In NR V2X, discussions have been performed to realize higher system capacity, reduced latency, higher reliability, QoS (Quality of Service) control.

With respect to LTE V2X or NR V2X, it is assumed that discussions may be not limited to 3GPP specifications in the future. For example, it is assumed to be discussed on: how to secure interoperability; how to reduce cost by implementing higher layers; how to use or how to switch multiple RATs (Radio Access Technologies); how to handle regulations of each country; how to obtain and distribute data of LTE/NR V2X platform; and how to manage and use databases.

In an embodiment of the present invention, a form of embodiment is mainly assumed in which communication devices are mounted on vehicles. However, an embodiment of the present invention is not limited to such a form. For example, communication devices may be terminals held by people, may be devices mounted on drones or aircrafts, or may be base stations, RSUs, relay stations (relay nodes), terminal capable of scheduling, etc.

It should be noted that SL (Sidelink) may be distinguished from UL (Uplink) or DL (Downlink) based on any one of, or any combination of the following 1) through 4). Furthermore, SL may be referred to as a different name.
1) resource arrangement (allocation) in the time domain
2) resource arrangement (allocation) in the frequency domain
3) synchronization signal that should be referred to (including SLSS (Sidelink Synchronization Signal))
4) reference signal that is used for pass loss measurement used for transmission power control

Further, with respect to OFDM (Orthogonal Frequency Division Multiplexing) of SL or UL, any of CP-OFDM (Cyclic-Prefix OFDM), DFT-S-OFDM (Discrete Fourier Transform-Spread-OFDM), OFDM without Transform precoding, and OFDM with Transform precoding may be applied.

In LTE SL, with respect to allocating SL resources to terminal 20, Mode 3 and Mode 4 are defined. In Mode 3, transmission resources are dynamically allocated using a DCI (Downlink Control Information) that is transmitted from a base station 10 to a terminal 20. Further, in Mode 3, SPS (Semi Persistent Scheduling) is enabled (available). In Mode 4, the terminal 20 autonomously selects transmission resources from a resource pool.

It should be noted that a slot according to an embodiment of the present invention may be read on (replaced with) a symbol, a mini slot, a subframe, a radio frame, or a TTI (Transmission Time Interval). Further, a cell according to an embodiment of the present invention may be read on (replaced with) a cell group, a carrier component, a BWP (bandwidth part), a resource pool, a resource, a RAT (Radio Access Technology), a system (including a wireless LAN), etc.

Note that, according to an embodiment of the present invention, the terminal 20 is not limited to a V2X terminal, but may be any type of terminal that performs D2D communication. For example, the terminal 20 may be a terminal carried by a user, such as a smart phone, or an IoT (Internet of Things) device, such as a smart meter.

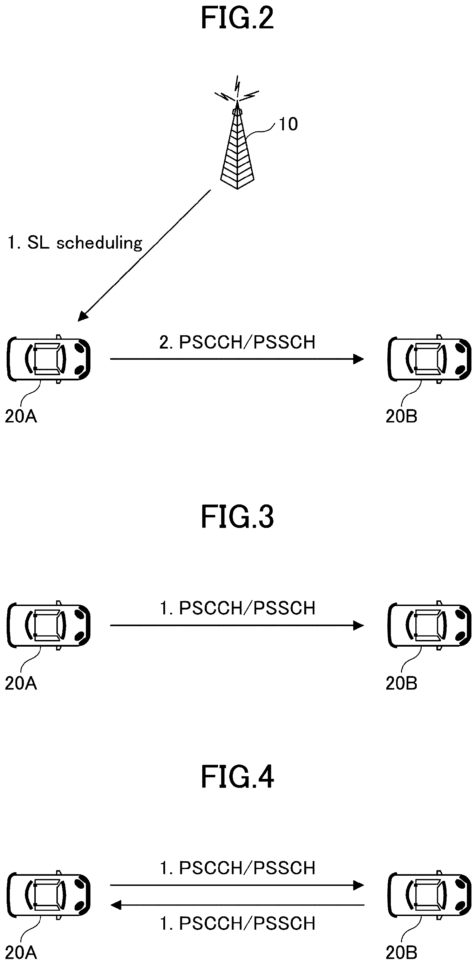

Fig. 2 is a diagram illustrating an example (1) of a V2X transmission mode. In a transmission mode of sidelink communication illustrated in Fig. 2, in step 1, a base station 10 transmits a sidelink scheduling to a terminal 20A. Next, the terminal 20A transmits PSCCH (Physical Sidelink Control Channel) and PSSCH (Physical Sidelink Shared Channel) to a terminal 20B based on the received scheduling (step 2). The transmission mode of sidelink communication illustrated in Fig. 2 may be referred to as a sidelink transmission mode 3 in LTE. In the sidelink transmission mode 3 in LTE, Uu based sidelink scheduling is performed. Uu is a radio interface between UTRAN (Universal Terrestrial Radio Access Network) and UE (User equipment). It should be noted that the transmission mode of sidelink communication illustrated in Fig. 2 may be referred to as a sidelink transmission mode 1 in NR.

Fig. 3 is a diagram illustrating an example (2) of a V2X transmission mode. In a transmission mode of sidelink communication illustrated in Fig. 3, in step 1, a terminal 20A transmits PSCCH and PSSCH to a terminal 20B using autonomously selected resources. The transmission mode of sidelink communication illustrated in Fig. 3 may be referred to as a sidelink transmission mode 4 in LTE. In the sidelink transmission mode 4 in LTE, the UE itself performs resource selection.

Fig. 4 is a diagram illustrating an example (3) of a V2X transmission mode. In a transmission mode of sidelink communication illustrated in Fig. 4, in step 1, a terminal 20A transmits PSCCH and PSSCH to a terminal 20B using autonomously selected resources. Similarly, the terminal 20B transmits PSCCH and PSSCH to the terminal 20A using autonomously selected resources (step 1). The transmission mode of sidelink communication illustrated in Fig. 4 may be referred to as a sidelink transmission mode 2a in NR. In the sidelink transmission mode 2 in NR, the terminal 20 itself performs resource selection.

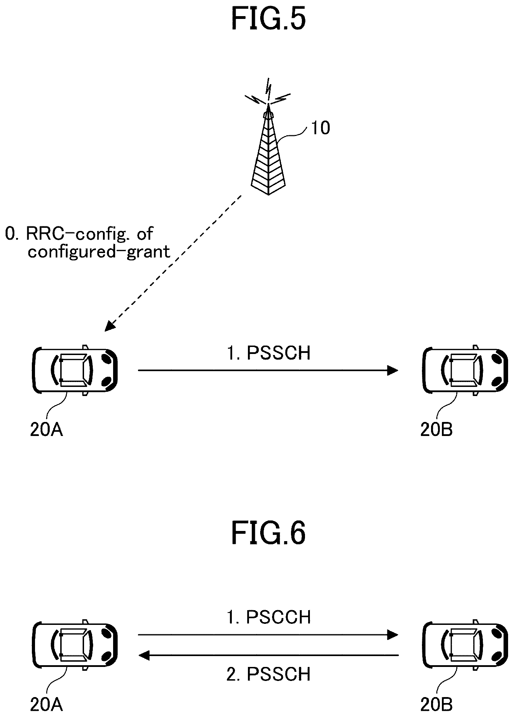

Fig. 5 is a diagram illustrating an example (4) of a V2X transmission mode. In a transmission mode of sidelink communication illustrated in Fig. 5, in step 0, a base station 10 transmits a sidelink grant to a terminal 20A via RRC (Radio Resource Control) configuration. Next, the terminal 20A transmits PSSCH to the terminal 20B based on the received resource pattern (step 1). The transmission mode of sidelink communication illustrated in Fig. 5 may be referred to as a sidelink transmission mode 2c in NR.

Fig. 6 is a diagram illustrating an example (5) of a V2X transmission mode. In the side-link communication transmission mode illustrated in FIG. 6, in step 1, the terminal 20A transmits sidelink scheduling to the terminal 20B via PSCCH. Next, the terminal 20B transmits PSSCH to the terminal 20A based on the received scheduling (step 2). The transmission mode of sidelink communication illustrated in Fig. 6 may be referred to as a sidelink transmission mode 2d in NR.

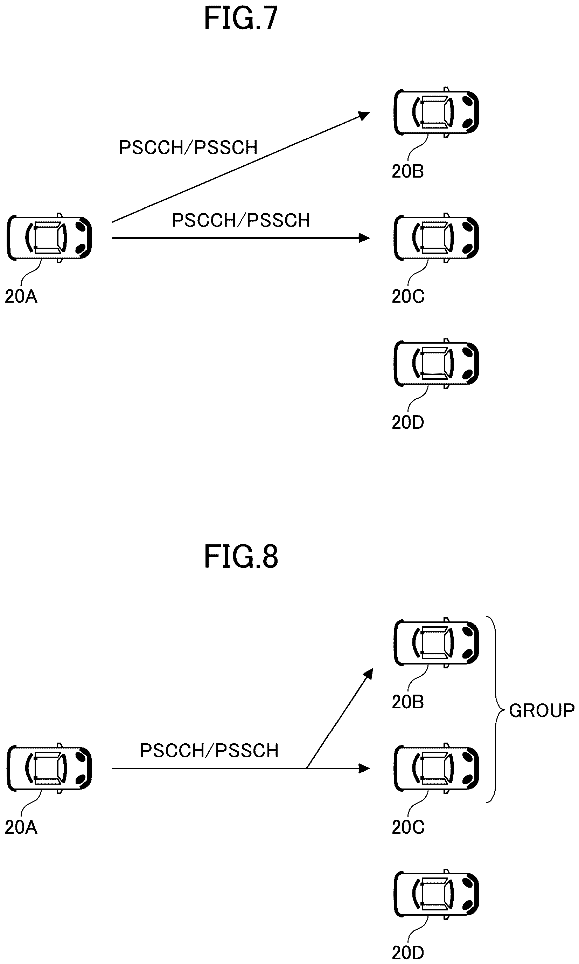

Fig. 7 is a diagram illustrating an example (1) of a V2X communication type. The sidelink communication type illustrated in Fig. 7 is uni-cast. The terminal 20A transmits PSCCH and PSSCH to terminal 20. In an example illustrated in Fig. 7, the terminal 20A performs uni-cast to the terminal 20B, and performs uni-cast to the terminal 20C.

Fig. 8 is a diagram illustrating an example (2) of a V2X communication type. The sidelink communication type illustrated in Fig. 8 is group-cast. The terminal 20A transmits PSCCH and PSSCH to a group to which one or more terminals 20 belong. In an example illustrated in Fig. 8, the group includes a terminal 20B and a terminal 20C, and the terminal 20A performs group-cast to the group.

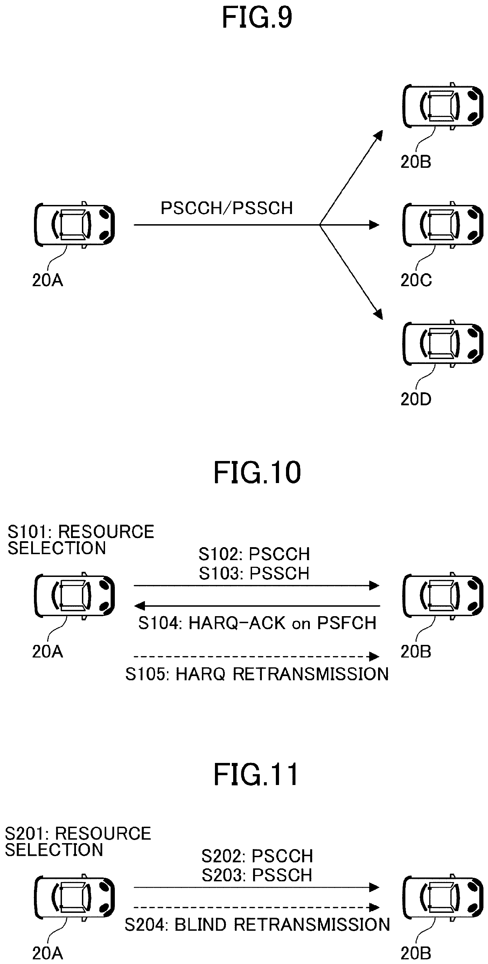

Fig. 9 is a diagram illustrating an example (3) of a V2X communication type. The terminal 20A transmits PSCCH and PSSCH to one or more terminals 20. In an example illustrated in Fig. 9, the terminal 20A performs broad-cast to terminal 20B, terminal 20C, and terminal 20D. Note that the terminal 20A shown in Figs. 7 to 9 may be referred to as a header-UE.

In addition, it is assumed that a HARQ (Hybrid automatic repeat request) is supported for unicast and groupcast of sidelink in NR-V2X. In addition, SFCI (Sidelink Feedback Control Information) containing a HARQ response is defined in NR-V2X. In addition, SFCI transmission via PSFCH (Physical Sidelink Feedback Channel) is under consideration.

Note that, in the following description, it is assumed that PSFCH is used in the transmission of HARQ-ACK on sidelink. However, this just an example. For example, PSCCH may be used to transmit HARQ-ACK on sidelink, PSSCH may be used to transmit HARQ-ACK on sidelink, or other channels may be used to transmit HARQ-ACK on sidelink.

Hereinafter, for the sake of convenience, the overall information reported by the terminal 20 in the HARQ is referred to as HARQ-ACK. This HARQ-ACK may also be referred to as HARQ-ACK information. Further, more specifically, a codebook applied to the HARQ-ACK information reported from the terminal 20 to the base station 10 or the like is called a HARQ-ACK codebook. The HARQ-ACK codebook defines a bit string (sequence) of the HARQ-ACK information. Note that "HARQ-ACK" sends not only ACK but also NACK.

Fig. 10 is a sequence diagram illustrating an operation example (1) of V2X. As shown in Fig. 10, the wireless communication system according to an embodiment of the present invention may include a terminal 20A and a terminal 20B. Note that there are many user devices, but Fig. 10 shows a terminal 20A and a terminal 20B as examples.

Hereinafter, when the terminals 20A, 20B, or the like are not particularly distinguished, the term "terminal 20" or "user device" will be simply described. Fig. 10 shows, for example, a case where both the terminal 20A and the terminal 20B are within a coverage of a cell. However, the operation in an embodiment of the the present invention embodiment can be applied to a case where the terminal 20B is outside the coverage.

As described above, in an embodiment, the terminal 20 is, for example, a device mounted in a vehicle such as an automobile and has a cellular communication function as a UE in LTE or NR and a sidelink function. Terminal 20 may be a conventional portable terminal (such as a smartphone). Further, the terminal 20 may also be an RSU. The RSU may be a UE-type RSU having the function of a UE or a gNB-type RSU having the function of a base station device.

Note that the terminal 20 need not be a single housing device. For example, even when various sensors are arranged and distributed in a vehicle, a device including the various sensors is may be a terminal 20.

Further, processing contents of sidelink transmission data of the terminal 20 are basically the same as those of UL transmission in LTE or NR. For example, the terminal 20 scrambles a codeword of the transmission data, modulates to generate complex-valued symbols, and maps the complex-valued symbols to one or two layers, and performs precoding. Further, the precoded complex-valued symbols are mapped to a resource element to generate a transmission signal (e.g., complex-valued time-domain SC-FDMA signal) and, and the generated signal is transmitted from each antenna port.

It is noted that the base station 10 has a function of cellular communication as a base station in LTE or NR and a function of enabling communication of the terminal 20 according to an embodiment of the present invention (e.g., resource pool setting, resource allocation, etc.). Further, the base station 10 may also be an RSU (gNB-type RSU).

Further, in the wireless communication system according to an embodiment of the present invention, a signal waveform used by the terminal 20 for SL or UL may be OFDMA, SC-FDMA, or other signal waveforms.

In step S101, the terminal 20A autonomously selects a resource to be used for PSCCH and PSSCH from a resource selection window having a predetermined period. The resource selection window may be configured (set) to the terminal 20 by the base station 10. Here, for a predetermined period of the resource selection window, the period may be specified by terminal implementation conditions such as, for example, processing time or maximum allowable packet delay time, the period may be specified in advance by specifications, or the predetermined period may be called an interval on the time domain.

In step S102 and Step S103, the terminal 20A transmits, using the resource autonomously selected in step S101, SCI (Sidelink Control Information) via PSCCH and/or PSSCH and transmits SL data via PSSCH. For example, the terminal 20A may transmit the PSCCH using a frequency resource adjacent to the PSSCH frequency resource with the same time resource as at least a portion of the time resource of the PSSCH.

The terminal 20B receives the SCI (PSCCH and/or PSSCH) and the SL data (PSSCH) transmitted from the terminal 20A. The received SCI may include information of a PSFCH resource for the terminal 20B to send HARQ-ACK for reception of the data. The terminal 20A may include information of the autonomously selected resource in the SCI and transmit the included information.

In step S104, the terminal 20B transmits a HARQ-ACK for the received data to the terminal 20A using the PSFCH resource specified by the received SCI.

In step S105, when the HARQ-ACK received in step S104 indicates a request for retransmission, that is, when the HARQ-ACK is a NACK (negative response), the terminal 20A retransmits the PSCCH and the PSSCH to the terminal 20B. The terminal 20A may retransmit the PSCCH and the PSSCH using an autonomously selected resource.

It is noted that, if HARQ control is not performed, step S104 and step S105 may not be performed.

Fig. 11 is a sequence diagram illustrating an example (2) of V2X operation. A non-HARQ-control-based blind retransmission may be performed to improve the transmission success rate or reach distance.

In step S201, the terminal 20A autonomously selects a resource to be used for PSCCH and PSSCH from a resource selection window having a predetermined period. The resource selection window may be configured (set) to the terminal 20 by the base station 10.

In step S202 and step S203, the terminal 20A transmits, using the resource autonomously selected in step S201, an SCI via PSCCH and/or PSSCH, and transmits SL data via PSSCH. For example, the terminal 20A may transmit the PSCCH using a frequency resource adjacent to the PSSCH frequency resource with the same time resource as at least a portion of the time resource of the PSSCH.

In step S204, the terminal 20A retransmits, using the resource autonomously selected in step S201, the SCI via PSCCH and the SL data via PSSCH to the terminal 20B. The retransmission in step S204 may be performed multiple times.

It is noted that, if the blind retransmission is not performed, step S204 may not be performed.

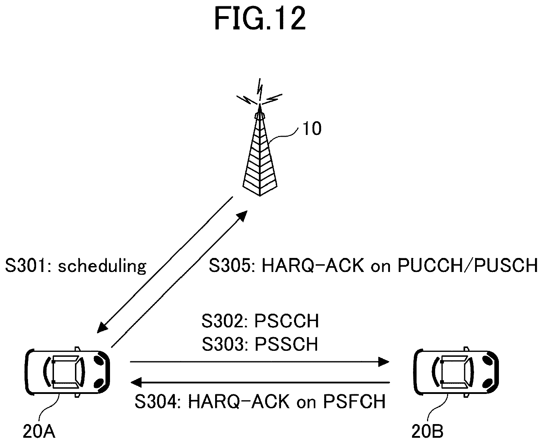

Fig. 12 is a sequence diagram illustrating an example (3) of V2X operation. The base station 10 may perform scheduling of the sidelink. That is, the base station 10 may determine a sidelink resource to be used by the terminal 20 and transmit information indicating the resource to the terminal 20. In addition, in a case where HARQ control with HARQ feedback is applied, the base station 10 may transmit information indicating a PSFCH resource to the terminal 20.

In step S301, the base station 10 performs SL scheduling by sending DCI (Downlink Control Information) to the terminal 20A via PDCCH. Hereafter, for the sake of convenience, the DCI for SL scheduling is called SL scheduling DCI.

Further, in Step S301, it is assumed that the base station 10 also transmits DCI for DL scheduling (which may be referred to as DL assignment) to the terminal 20A via the PDCCH. Hereafter, for the sake of convenience, the DCI for DL scheduling is called a DL scheduling DCI. The terminal 20A, which has received the DL scheduling DCI, receives DL data via PDSCH using a resource specified by the DL scheduling DCI.

In step S302 and step S303, the terminal 20A transmits, using the resource specified by the SL scheduling DCI, SCI (Sidelink Control Information) via PSCCH and/or PSSCH and transmits SL data via PSSCH. Note that, in the SL scheduling DCI, only a PSSCH resource may be specified. In this case, For example, the terminal 20A may transmit the PSCCH using a frequency resource adjacent to the PSSCH frequency resource with the same time resource as at least a portion of the time resource of the PSSCH.

The terminal 20B receives the SCI (PSCCH and/or PSSCH) and the SL data (PSSCH) transmitted from the terminal 20A. The SCI received via the PSCCH and/or PSSCH includes information of a PSFCH resource for the terminal 20B to send a HARQ-ACK for reception of the data.

The information of the resource is included in the DL scheduling DCI or SL scheduling DCI transmitted from the base station 10 in S301, and the terminal 20A acquires the information of the resource from the DL scheduling DCI or the SL scheduling DCI and includes the acquired information in the SCI. Alternatively, the DCI transmitted from the base station 10 may not include the information of the resource, and the terminal 20A may autonomously include the information of the resource in the SCI and transmit the SCI including the information.

In step S304, the terminal 20B transmits a HARQ-ACK for the received data to the terminal 20A using the PSFCH resource specified by the received SCI.

In step S305, the terminal 20A transmits the HARQ-ACK using, for example, a PUCCH (Physical uplink control channel) resource specified by the DL scheduling DCI (or SL scheduling DCI) at the timing (e.g., slot-by-slot timing) specified by the DL scheduling DCI (or SL scheduling DCI), and the base station 10 receives the HARQ-ACK. The HARQ-ACK codebook may include HARQ-ACK received from the terminal 20B or HARQ-ACK generated based on PSFCH that is not received, and HARQ-ACK for the DL data. Note, however, the HARQ-ACK for DL data is not included if DL data is not allocated. In NR Rel.16, the HARQ-ACK codebook does not include HARQ-ACK for DL data.

It is noted that, if HARQ control is not performed, step S304 and step S305 may not be performed.

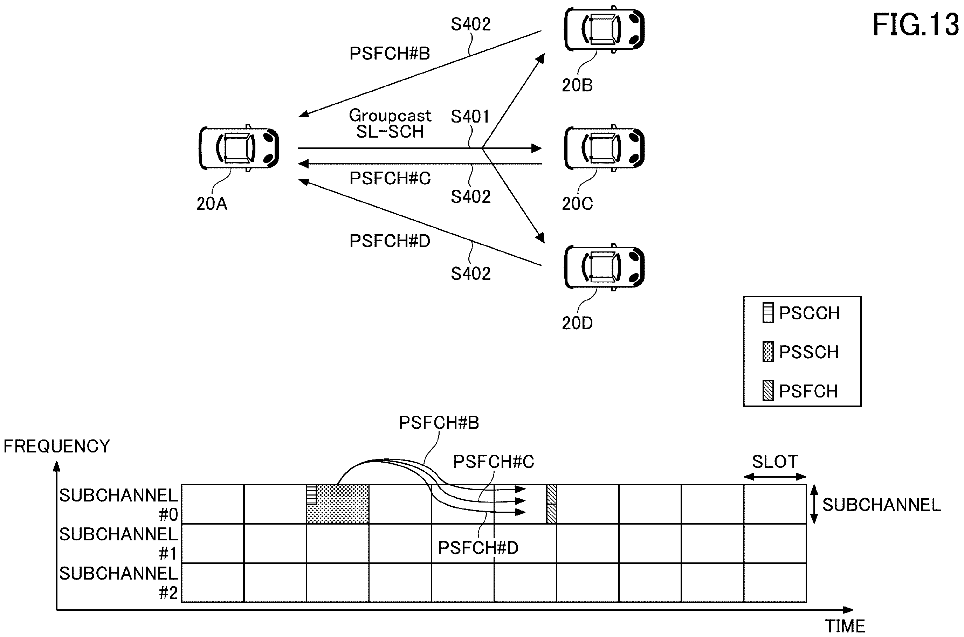

Fig. 13 is a sequence diagram illustrating an example (4) of V2X operation. As described above, it is supported in the NR sidelink that the HARQ response is transmitted via PSFCH. It is noted that, with respect to the format of PSFCH, the same format as that of PUCCH (Physical Uplink Control Channel) format 0 can be used, for example. That is, the PSFCH format may be a sequence-based format with a PRB (Physical Resource Block) size of 1, ACK and NACK being identified by sequence differences. The format of PSFCH is not limited to the above-described format. PSFCH resources may be located at the last symbol of a slot or a plurality of last symbols of a slot. Further, a period N may be configured or predefined for the PSFCH resource. The period N may be configured or predefined in a unit of slot.

In Fig. 13, the vertical axis corresponds to the frequency domain and the horizontal axis corresponds to the time domain. PSCCH may be arranged at the first symbol, may be arranged at a plurality of first symbols of a slot, or may be arranged at a plurality of symbols from a symbol other than the first symbol of a slot. PSFCH may be arranged at the last symbol of a slot, or may be arranged at a plurality of last symbols. The "first slot" and the "last slot" described above may omit consideration of symbols for Automatic Gain Control (AGC) and symbols for transmission/reception switching. That is, for example, if a slot consists of 14 symbols, the "first slot" and the "last slot" may mean that they are the first and last symbols in the 12 symbols, excluding the first and last symbols, respectively. In an example shown in Fig. 13, three sub-channels are configured in a resource pool, and two PSFCHs are arranged in a slot after three slots from a slot in which PSSCH is arranged. Arrows from PSSCH to PSFCH indicate an example of PSFCH associated with PSSCH.

In a case of option 2 where an ACK or NACK is transmitted in a HARQ response in the NR-V2X group-cast, it is necessary to determine resources used for transmitting and receiving PSFCH. As shown in Fig. 13, in step S401, the terminal 20A, which is the transmitting side terminal 20, performs groupcast with respect to the terminal 20B, the terminal 20C, and the terminal 20D, which are the receiving side terminals 20, via SL-SCH. In the subsequent step S402, the terminal 20B uses PSFCH#B, the terminal 20C uses PSFCH#C, and the terminal 20D uses PSFCH#D to transmit HARQ responses to the terminal 20A. Here, as shown in an example of Fig. 13, in a case where the number of PSFCH resources available is less than the number of receiving side terminals 20 belonging to the group, it is necessary to determine how to allocate PSFCH resources. It is noted that the transmitting side terminal 20 may obtain the number of the receiving side terminals 20 in the groupcast. Note that in option 1 of the groupcast, only NACK is transmitted and no ACK is transmitted as a HARQ response.

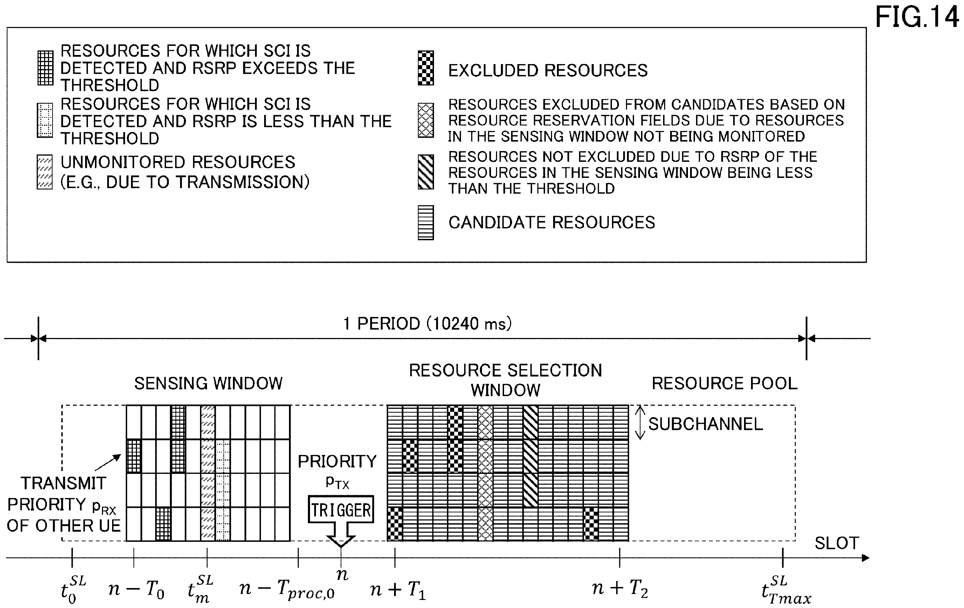

Fig. 14 is a diagram illustrating an example of sensing operation in NR. In resource allocation mode 2, the terminal 20 selects a resource and transmits it. As shown in Fig. 14, the terminal 20 performs sensing in a sensing window in the resource pool. With sensing, the terminal 20 receives the resource reservation or resource allocation (or resource assignment) field contained in the SCI transmitted from the other terminal 20 and identifies available resource candidates in the resource selection window in the resource pool based on the field. Subsequently, the terminal 20 randomly selects a resource from the available resource candidates.

Further, as shown in Fig. 14, the setting of the resource pool may have a period. For example, the period may be a period of 10240 milliseconds. Fig. 14 shows an example in which slots t₀^{SL} to t_{Tmax}^{SL} are set as resource pools. The resource pools within each period may have areas set by, for example, bitmaps.

Further, as shown in Fig. 14, it is assumed that the transmission trigger in the terminal 20 occurs in slot n and the priority of the transmission is p_{TX}. In the sensing window from slot n-To to the slot immediately preceding slot n-T_{proc,0}, the terminal 20 can detect, for example, that another terminal 20 is transmitting priority p_{RX}. If an SCI is detected in the sensing window and the Reference Signal Received Power (RSRP) exceeds the threshold, the resource in the resource selection window corresponding to the SCI is excluded. Also, if an SCI is detected in the sensing window and the RSRP is below the threshold, the resource in the resource selection window corresponding to the SCI is not excluded. The threshold may be, for example, a threshold Th_{pTX,pRX} set or defined for each resource in the sensing window based on the priority p_{TX} and priority p_{RX}.

In addition, resources in the resource selection window that are candidates for resource reservation information corresponding to resources in the sensing window that were not monitored are excluded, for example, for transmission, as in the slot tₘ^{SL} shown in Fig. 14.

In the resource selection window from slots n+T₁ to n+T₂, as shown in Fig. 14, resources occupied by other UEs are identified, and the resources from which the resources are excluded become available resource candidates. If the set of available resource candidates is S_{A} and S_{A} is less than 20% of the resource selection window, resource identification may be performed again by increasing the thresholds Th_{pTX,pRX} set for each resource in the sensing window by 3 dB. That is, by increasing the thresholds Th_{pTX,pRX} and performing resource identification again, resources that are not excluded because RSRP is less than the threshold may be increased so that the set S_{A} of resource candidates is 20% or more of the resource selection window. If the S_{A} is less than 20% of the resource selection window, the action of raising the thresholds Th_{pTX,pRX} set for each resource in the sensing window by 3 dB to perform resource identification again may be repeated.

Lower layers of the terminal 20 may report the S_{A} to higher layers. Upper layers of the terminal 20 may perform random selection on the S_{A} to determine which resources to use. The terminal 20 may perform sidelink transmission using the determined resources.

Although the operation of the transmitting-side terminal 20 has been described in Fig. 14 above, the receiving-side terminal 20 may detect data transmission from the other terminal 20 and receive data from the other terminal 20 based on sensing or partial sensing results.

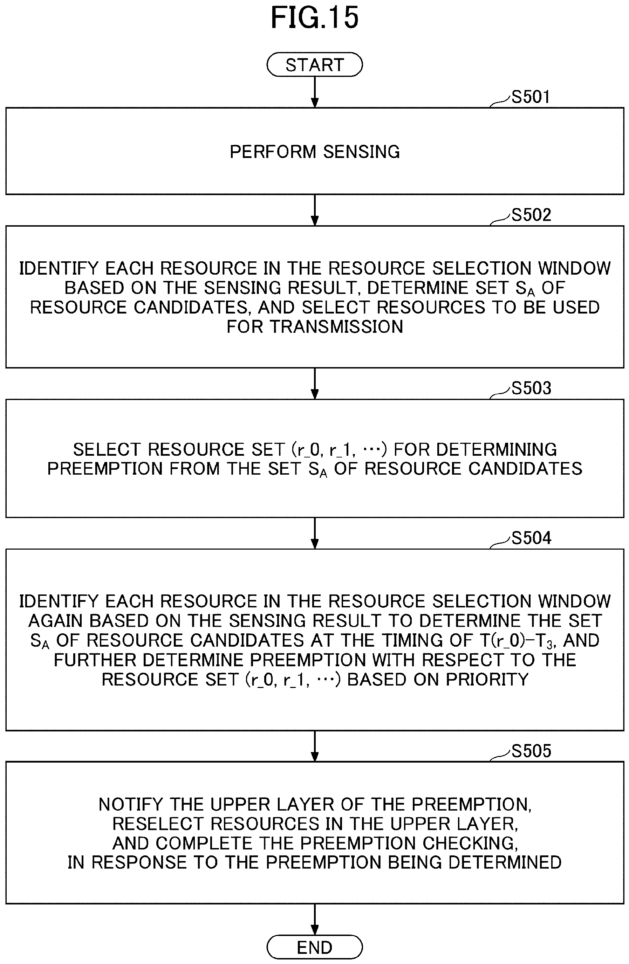

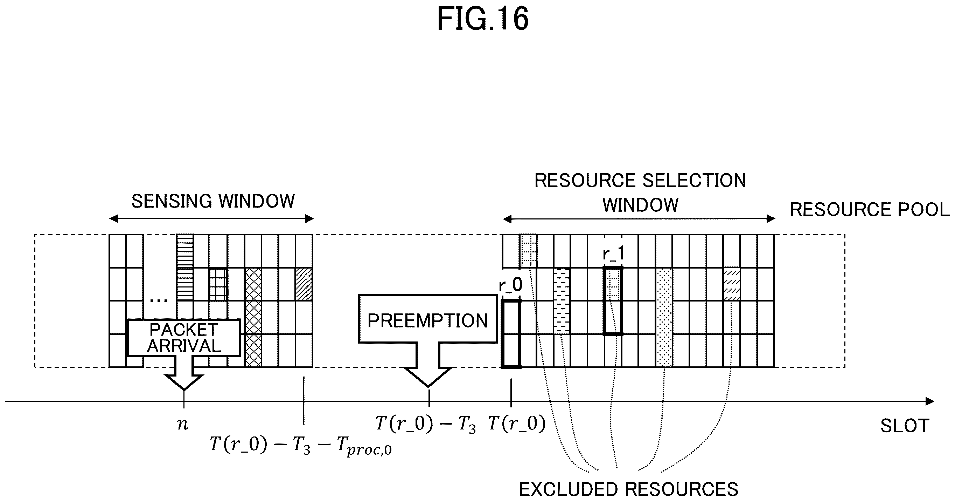

Fig. 15 is a flowchart illustrating an example of preemption in NR. Fig. 16 is a diagram illustrating an example of preemption in NR. In step S501, the terminal 20 performs sensing in the sensing window. When the terminal 20 performs power-saving operation, sensing may be performed for a predetermined limited period of time. Subsequently, the terminal 20 determines a set S_{A} of resource candidates by identifying each resource in the resource selection window based on the sensing result, and selects a resource to be used for transmission (S502). Subsequently, the terminal 20 selects a resource set (r_0, r_1, ...) for determining preemption from the set S_{A} of resource candidates (S503). The resource set may be notified to the PHY layer from the higher layer as a resource for determining whether or not the resource is preempted.

In step S504, the terminal 20 determines the set S_{A} of resource candidates by re-identifying each resource in the resource selection window based on the sensing result and determines preemption for the resource set (r_0, r_1, ...) based on the priority at the timing T (r_0) - T₃ shown in Fig. 16. For example, r_1 shown in Fig. 16 is not included in the S_{A} because the SCI transmitted from the other terminal 20 is detected by re-sensing. With preemption being enabled, if the value prio_RX indicating the priority of the SCI transmitted from the other terminal 20 is lower than the value prio_TX indicating the priority of the transport block transmitted from the reference terminal, the terminal 20 determines that the resource r_1 is preempted. Note that the lower the value indicating the priority, the higher the priority. That is, if the value prio_RX indicating the priority of the SCI transmitted from the other terminal 20 is higher than the value prio_TX indicating the priority of the transport block transmitted from the reference terminal, the terminal 20 does not exclude the resource r_1 from the S_{A}. Alternatively, if preemption is only valid for a specific priority (e.g., if sl-PreemptionEnable is one of pl1, pl2, ..., pl8), this priority is prio_pre. At this point, if the value prio_RX indicating the priority of the SCI transmitted from the other terminal 20 is lower than prio_pre, and prio_RX is lower than the value prio_TX indicating the priority of the transport block transmitted from the reference terminal, the terminal 20 determines that the resource r_1 has been preempted.

In step S505, if the preemption is determined in step S504, the terminal 20 notifies the higher layer of the preemption, reselects the resource in the higher layer, and ends the preemption check.

Here, power saving based on random resource selection and partial sensing is considered in NR Release 17 sidelink. For example, for power saving, sidelink Random Resource Selection and Partial Sensing in LTE Release 14 may be applied to NR Release 16 sidelink Resource Allocation Mode 2. The terminal 20 to which partial sensing is applied performs reception and sensing only in specific slots in the sensing window.

In addition, in NR Release 17 sidelink, eURLLC (enhanced Ultra Reliable Low Latency Communication) is being considered with inter-UE coordination as a baseline. For example, the terminal 20A may share information indicating a resource set with the terminal 20B, and the terminal 20B may consider this information in selecting resources for transmission.

At the terminal 20, if SL transmission and UL transmission overlap at least in the time domain, it affects reliability and delay performance of SL transmission. For example, the terminal 20 may decide to prioritize either overlapping SL transmission or UL transmission. Thereafter, the operation is determined according to capability of the terminal. For example, when simultaneous transmission of SL and UL is possible, the power of non-priority transmission is reduced and simultaneous transmission is performed so that the total transmission power does not exceed the maximum value. For example, when simultaneous transmission of SL and UL is not possible, the non-priority transmission is dropped and the priority transmission is executed.

Overlapping of UL transmission and SL reception also affects reliability and delay performance of SL communication. For example, the terminal 20 may decide to prioritize either overlapping UL transmission or SL reception. Subsequently, for example, a communication that is not prioritized is dropped to execute communication that is preferred.

As described above, in the prior art, processing to be performed when UL transmission and SL transmission or reception overlap is specified, but effects on performance cannot be avoided when the overlap occurs.

Therefore, SL transmitting side terminal 20A may perform an operation related to resource allocation based on at least one of pieces of information shown in a)-c) below.
a)Information related to UL transmission of the terminal 20A, received from the network or the base station 10
b)Information related to UL transmission of the terminal 20B, received from the SL receiving side terminal 20B
c)Information related to UL transmission of the SL receiving side terminal 20B, received from the network or the base station 10

The definition and acquisition method of the information shown in a)-c) above are described below. The operation related to resource allocation will be described in detail below.

As described above, when the SL transmitting side terminal 20 executes resource allocation operation based on the above-described information, it is possible to avoid overlap between SL transmission and UL transmission or overlap between SL reception and UL transmission. Accordingly, it is possible to prevent degradation of reliability and delay performance of sidelink communication due to overlapping.

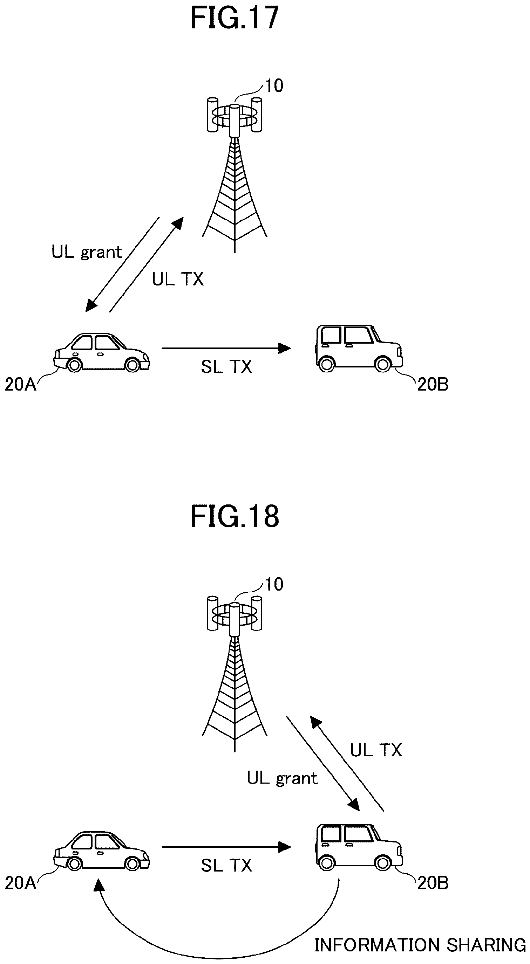

Fig. 17 is a diagram showing an example (1) of a communication state according to an embodiment of the present invention. As shown in FIG. 17, the terminal 20A performs SL transmission to the terminal 20B, receives an UL grant from the base station 10, and performs UL transmission. The information a) related to UL transmission of the terminal 20A received from the network or the base station 10 may be information that is related to a resource by which the terminal 20A is going to perform UL transmission, and that is at least one of pieces of information shown in 1) to 5) below.
1)Information indicating dynamically scheduled PUSCH, PUCCH, or SRS resources. For example, the resource may be a resource in the time domain.
2)Information that indicates a configured or activated PUSCH, PUCCH, or SRS resource. For example, the resource may be a resource in the time domain or it may be a periodic resource. The information may be its periodicity.
3)Information indicating a PRACH resource corresponding to a received SSB (SS/PBCH block).
4)Information indicating a priority of UL transmission. For example, the priority may be a PHY priority, i.e., a priority at layer 1, or a MAC priority, i.e., a priority at layer 2.
5)Information indicating a channel type, signal type or information type related to UL transmission. For example, the channel type may be PUCCH, PUSCH, PRACH, or the like. For example, the signal type may be an SRS, etc. For example, the information type may be UL-SCH, HARQ-ACK, SR, or CSI or the like.

Fig. 18 is a diagram showing an example (2) of a communication state according to an embodiment of the present invention. As shown in FIG. 18, the terminal 20A performs SL transmission to the terminal 20B, receives an UL grant from the base station 10, and performs UL transmission. The information b) related to UL transmission of the terminal 20B received from the SL receiving side terminal 20B may be information that is related to a resource by which the terminal 20B is going to perform UL transmission, and that is at least one of pieces of information shown in 1) to 5) below.
1)Information indicating dynamically scheduled PUSCH, PUCCH, or SRS resources. For example, the resource may be a resource in the time domain.
2)Information that indicates a configured or activated PUSCH, PUCCH, or SRS resource. For example, the resource may be a resource in the time domain or it may be a periodic resource. The information may be its periodicity.
3)Information indicating a PRACH resource corresponding to a received SSB (SS/PBCH block).
4)Information indicating a priority of UL transmission. For example, the priority may be a PHY priority, i.e., a priority at layer 1, or a MAC priority, i.e., a priority at layer 2.
5)Information indicating a channel type, a signal type or information type related to UL transmission. For example, the channel type may be PUCCH, PUSCH, PRACH, or the like. For example, the signal type may be an SRS, etc. For example, the information type may be UL-SCH, HARQ-ACK, SR, or CSI or the like.

The above information may be shared or transmitted from the terminal 20B to the terminal 20A via PHY, MAC, or PC5-RRC signaling. The terminal 20B may share the above-described information with the terminal 20A on any of the occasions shown in 1)-3 below.
1)When information related to UL transmission is received from the base station 10
2)When requested by the other terminal 20
3)When a priority on UL transmission satisfies a specified condition (e.g. when the priority is higher than a certain priority or lower than a certain priority)

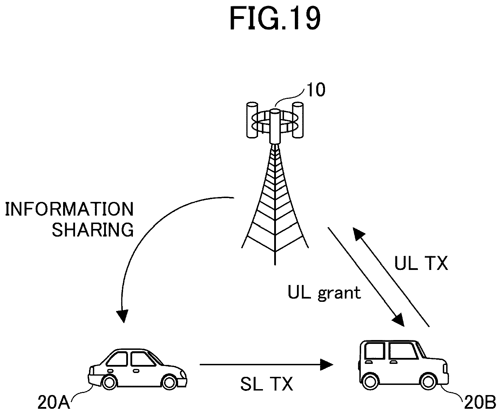

Fig. 19 is a diagram showing an example (3) of a communication state according to an embodiment of the present invention. As shown in FIG. 19, the terminal 20A performs SL transmission to the terminal 20B, receives an UL grant from the base station 10, and performs UL transmission. The information c) related to UL transmission of the SL receiving side terminal 20B received from the network or the base station 10 may be information that is related to a resource by which the terminal 20B is going to perform UL transmission and that is at least one of pieces of information shown in 1) to 5) below.
1)Information indicating dynamically scheduled PUSCH, PUCCH, or SRS resources. For example, the resource may be a resource in the time domain.
2)Information that indicates a configured or activated PUSCH, PUCCH, or SRS resource. For example, the resource may be a resource in the time domain or it may be a periodic resource. The information may be its periodicity.
3)Information indicating a PRACH resource corresponding to a received SSB (SS/PBCH block).
4)Information indicating a priority of UL transmission. For example, the priority may be a PHY priority, i.e., a priority at layer 1, or a MAC priority, i.e., a priority at layer 2.
5)Information indicating a channel type, signal type or information type related to UL transmission. For example, the channel type may be PUCCH, PUSCH, PRACH, or the like. For example, the signal type may be an SRS, etc. For example, the information type may be UL-SCH, HARQ-ACK, SR, or CSI or the like.

The above information may be transmitted from the base station 10 to the terminal 20A via PHY, MAC, or PC5-RRC signaling.

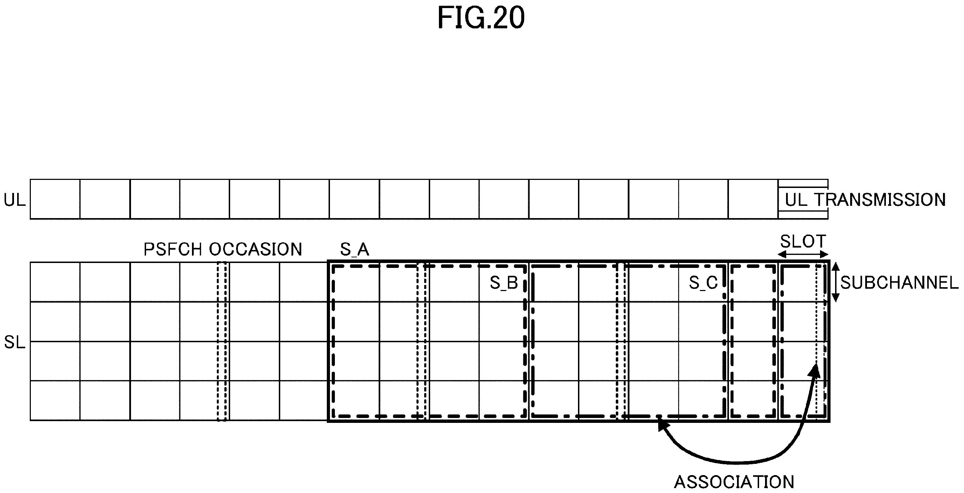

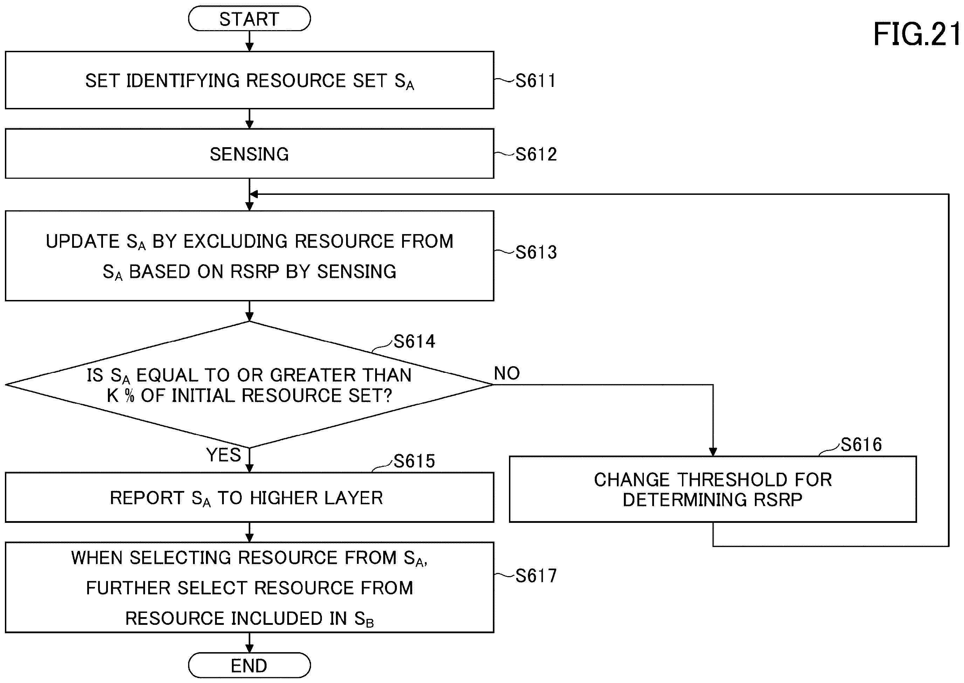

Fig. 20 is a diagram showing an example of resource allocation according to an embodiment of the present invention. Suppose that a resource set S_{A} shown in Fig. 20 is all candidate resources included in a resource selection window before performing resource exclusion operation. Based on the information of at least one of a) b) and c) above, a resource set S_{B} may be determined based on at least one of the conditions 1)-5) below. In Fig. 20, a resource enclosed by a solid line indicates S_{A}, a resource enclosed by a dashed line indicates S_{B}, and a resource enclosed by a chain line indicates S_{C}. The S_{B} is a resource set used in the flowchart illustrating an example of resource selection described in Figs. 21 to 24. S_{C} is a resource set that is not included in S_{B} in S_{A}.

Condition 1) PSCCH and/or PSSCH resources in a time resource or slot where terminal 20A does not perform UL transmission and/or terminal 20B does not perform UL transmission may be included in S_{B}. The PSCCH and/or PSSCH resources in time resources or slots where the terminal 20A performs UL transmission and/or the terminal 20B performs UL transmission may be excluded from S_{B}.

Condition 2) If the terminal 20A does not perform UL transmission and/or the terminal 20B does not perform UL transmission in the same time resource as a PSFCH occasion, PSCCH and/or PSSCH resources in time resources or slots corresponding to the PSFCH occasion may be included in S_{B}.

Condition 3) When the terminal 20A performs UL transmission and/or the terminal 20B performs UL transmission in the same time resource as a PSFCH occasion, PSCCH and/or PSSCH resources in time resources or slots corresponding to that PSFCH occasion may be excluded from S_{B}.

Condition 4) PSCCH and/or PSSCH resources in time resources or slots that meet Conditions 1 and 2 simultaneously may be included in S_{B}. PSCCH and/or PSSCH resources in time resources or slots that meet Conditions 1 and 2 and 3 simultaneously may be included in S_{B}. Fig. 20 is an example of S_{B} that satisfies condition 1, condition 2 and condition 3 at the same time.

Condition 5) S_{B} may be determined based on the priority of UL transmission and/or the priority of SL transmission. For example, in FIG. 20, if the UL transmission priority is lower than the SL transmission priority, a slot in which the UL transmission is arranged may be included in S_{B}.

Fig. 21 is a flowchart illustrating an example (1) of resource selection according to an embodiment of the present invention. In step S611, the terminal 20 sets a resource set S_{A} to be identified. S_{A} at step S611 may be an initial resource set. Subsequently, the terminal 20 performs sensing (S612). Step S611 and Step S612 may be implemented in opposite order. In step S613, the terminal 20 updates S_{A} by excluding resources from S_{A} based on RSRP by sensing. The operation to exclude such resources may be similar to the sensing example described using Fig. 14.

In step S614, the terminal 20 determines whether S_{A} is equal to or greater than K% of the initial resource set. If it is equal to or greater than K%, go to step S615, and if it is less than K%, go to step S616. K may be any value, for example, K may be 20 or 30 or 50.

In step S615, the terminal 20 reports S_{A} to the higher layer. Meanwhile, in step S616, the terminal 20 changes the threshold value for determining RSRP to execute step S613 again. The terminal 20 may increase the threshold by, for example, 3dB.

In step S617, the terminal 20 may further select a resource to be used from resources included in S_{B} when performing resource selection from S_{A}. For example, if a resource included in S_{B} is included in S_{A}, the resource to be used may be always selected from resources included in S_{B}. If resources included in S_{B} are not included in S_{A}, any of resources included in S_{A} may be selected. The probability of selecting the resources to be used from the resources included in S_{B} in S_{A} may be increased, or the probability of selecting the resources to be used from the resources not included in S_{B} in S_{A} may be reduced.

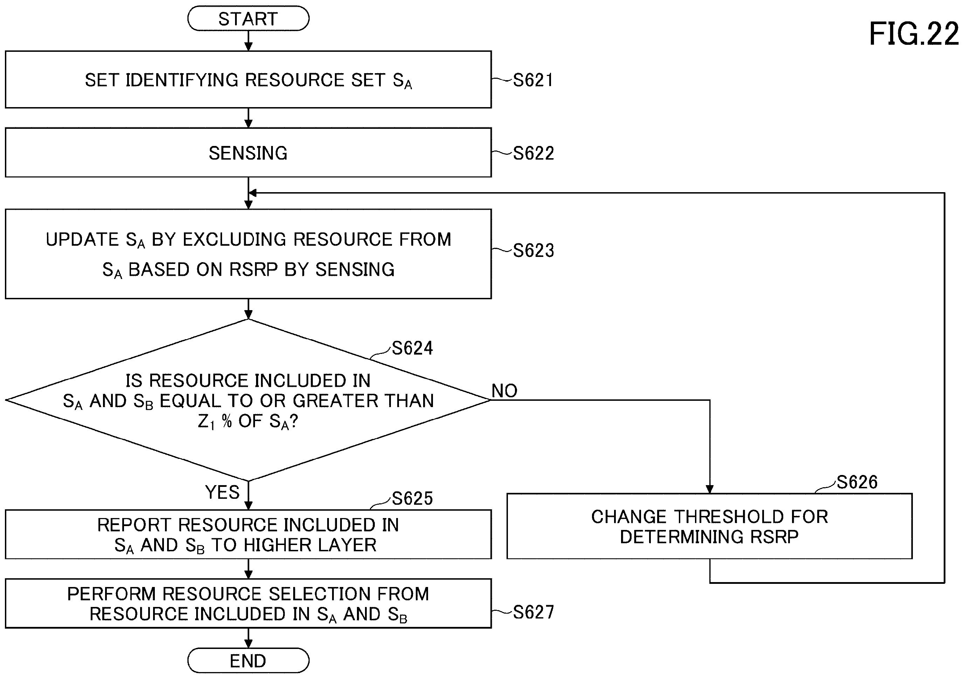

Fig. 22 is a flowchart illustrating an example (2) of resource selection according to an embodiment of the present invention. In step S621, the terminal 20 sets a resource set S_{A} to be identified. S_{A} at step S621 may be an initial resource set. Subsequently, the terminal 20 performs sensing (S622). Step S621 and step S622 may be implemented in opposite order. In step S623, the terminal 20 updates S_{A} by excluding resources from S_{A} based on RSRP by the sensing. The operation to exclude such resources may be similar to the sensing example described using Fig. 14.

In step S624, the terminal 20 determines whether or not the resources included in S_{A} and S_{B} are equal to or greater than Z₁% of S_{A}. If it is equal to or greater than Z %, the process proceeds to step S625, and if it is less than Z₁%, to step S626. Z₁ may be any value, for example, it may be 20 or 30 or 50. Resources included in S_{A} and S_{B} are resources included in S_{A} and included in S_{B}.

In step S624, the terminal 20 may determine whether or not resources included in S_{A} and S_{B} are equal to or greater than Z₂% of S_{A}, that is, the initial resource set at the time of step S621. If it is equal to or greater than Z₂%, the step proceeds to step S625, and if it is less than Z₂%, to step S626. Z₂ may be any value, for example, it may be 20 or 30 or 50.

In step S625, the terminal 20 reports resources contained in S_{A} and S_{B} to the higher layer. Meanwhile, in step S626, the terminal 20 changes the threshold value for determining RSRP to execute step S623 again. The terminal 20 may increase the threshold by, for example, 3 dB.

In step S627, the terminal 20 performs resource selection from the resources contained in S_{A} and S_{B}.

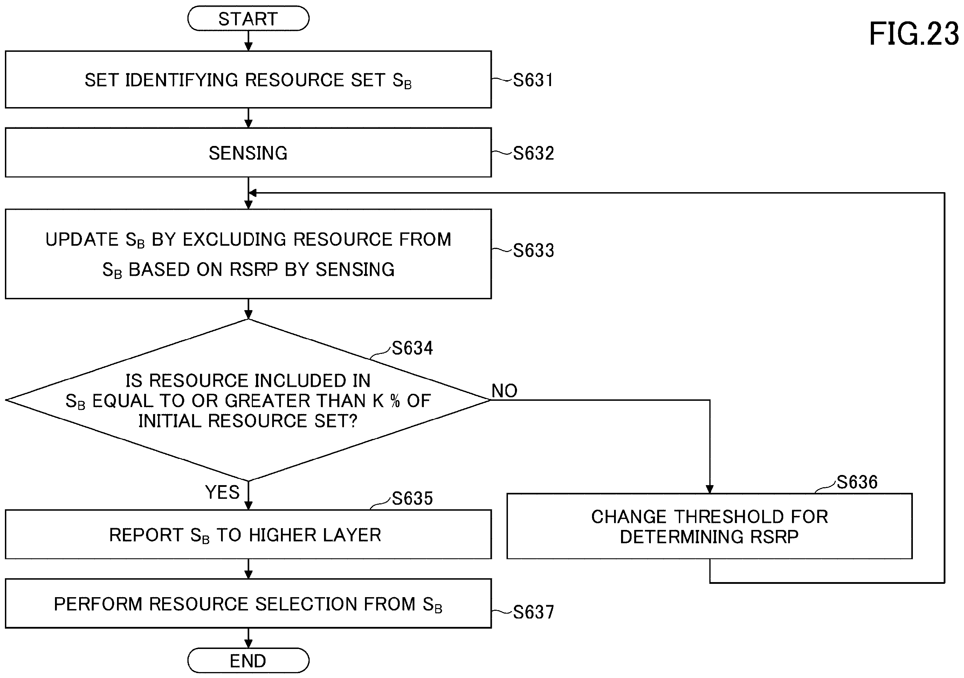

Fig. 23 is a flowchart illustrating an example (3) of resource selection according to an embodiment of the present invention. In step S631, the terminal 20 sets the resource set S_{B} to be identified. S_{B} at step S631 may be an initial resource set. Subsequently, the terminal 20 performs sensing (S632). Step S631 and Step S632 may be performed in opposite order. Subsequently, in step S633, the terminal 20 updates S_{B} by excluding resources from S_{B} based on RSRP by sensing. The operation to exclude such resources may be similar to the sensing example described using Fig. 14.

In step S634, the terminal 20 determines whether S_{B} is equal to or greater than K% of the initial resource set. If it is equal to or greater than K%, go to step S635, and if it is less than K%, go to step S636. K may be any value, for example it may be 20 or 30 or 50.

In step S635, the terminal 20 reports S_{B} to the higher layer. Meanwhile, in step S636, the terminal 20 changes the threshold value for determining RSRP to execute step S633 again. The terminal 20 may increase the threshold by, for example, 3 dB.

In step S637, the terminal 20 performs resource selection from S_{B}.

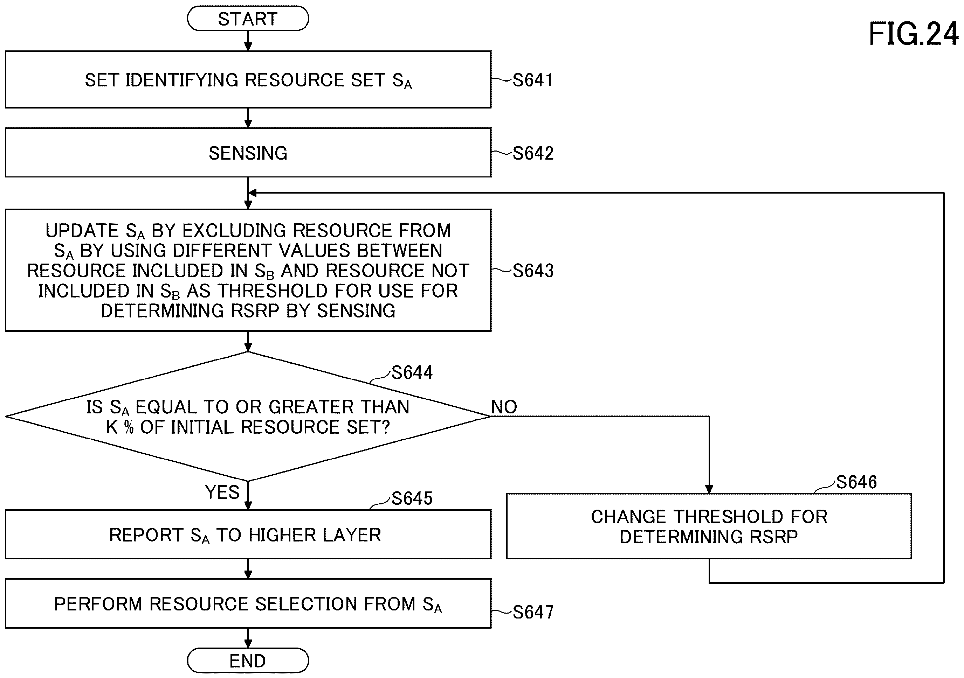

Fig. 24 is a flowchart illustrating an example (4) of resource selection according to an embodiment of the present invention. In step S641, the terminal 20 sets the resource set S_{A} to be identified. S_{A} at step S641 may be the initial resource set. Subsequently, the terminal 20 performs sensing (S642). Step S641 and Step S642 may be performed in opposite order.

In step S643, the terminal 20 updates S_{A} by excluding resources from S_{A} based on RSRP by sensing. Here, a different value may be applied, to a threshold applied to RSRP of a resource, included in S_{B} in S_{A} and to a threshold applied to RSRP of a resource of S_{A} not included in S_{B}. For example, the threshold applied to RSRP of a resource, included in S_{B} in S_{A} may be increased by XdB compared to the threshold applied to RSRP of a resource, not included in S_{B} in S_{A}. The operation to exclude such resources may be similar to the sensing example described using Fig. 14.

In step S644, the terminal 20 determines whether S_{A} is equal to or greater than K% of the initial resource set. If it is equal to or greater than K%, go to step S645, and if it is less than K%, go to step S646. K may be any value, for example it may be 20 or 30 or 50.

In step S645, the terminal 20 reports S_{A} to the higher layer. Meanwhile, in step S646, the terminal 20 changes the threshold value for determining RSRP to execute step S643 again. The terminal 20 may increase the threshold by, for example, 3 dB.

In step S647, the terminal 20 performs resource selection from S_{A}.

For example, a reevaluation of a resource may be performed using the retrieval of the information shown in a) b) or c) above as a trigger. Resource reevaluation may be performed similar to decision on preemption described in FIGS. 15 and 16.

It should be noted that the operation related to the resource selection described in FIGS. 21-24 may be applied to the reevaluation and/or preemption of resources.

For each priority, which operation to apply among operations related to the resource selection described in Figs. 21 to 24 may be configured.

Each step of the operation related to the resource selection described in Figs. 21 to 24 may be combined or replaced. For example, step S627 or step S647 may be changed to step S617. For example, step S614 or step S644 may be changed to step S624. For example, step S613 or step S623 may be changed to step S643.

Which operation to apply among operations related to the resource selection described in Figs. 21 to 24 may be configured based on whether the terminal has a capability to simultaneously transmit SL and UL.

Note that the above example may be applied to the operation in which one terminal 20 sets or allocates transmission resources of another terminal 20. That is, the resource setting or allocation may be performed so that the above example is satisfied.

The above example is not limited to V2X terminals but may be applied to terminals performing D2D communication.

The operation in the above example may be performed only in a specific resource pool. For example, the operation in the above example may be performed only in a resource pool where a terminal 20 of Release 17 or later is available.

The embodiments described above may be applied between terminals 20 where a PC5-RRC connection is established. The above embodiments may be applied to either broadcast, groupcast, or unicast. In the above-described embodiment, "terminal 20" may correspond to a plurality of terminals 20.

In accordance with the embodiments described above, in sensing-based resource identification and resource selection in sidelink, the terminal 20 takes into account the time domain resources used for uplink so that reliability of the sidelink transmission and reception can be improved.

In other words, in direct communication between terminals, the reliability of communication at the time of autonomous resource selection can be improved.

### (Device configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only some of the functions in an embodiment.

### <Base station 10>

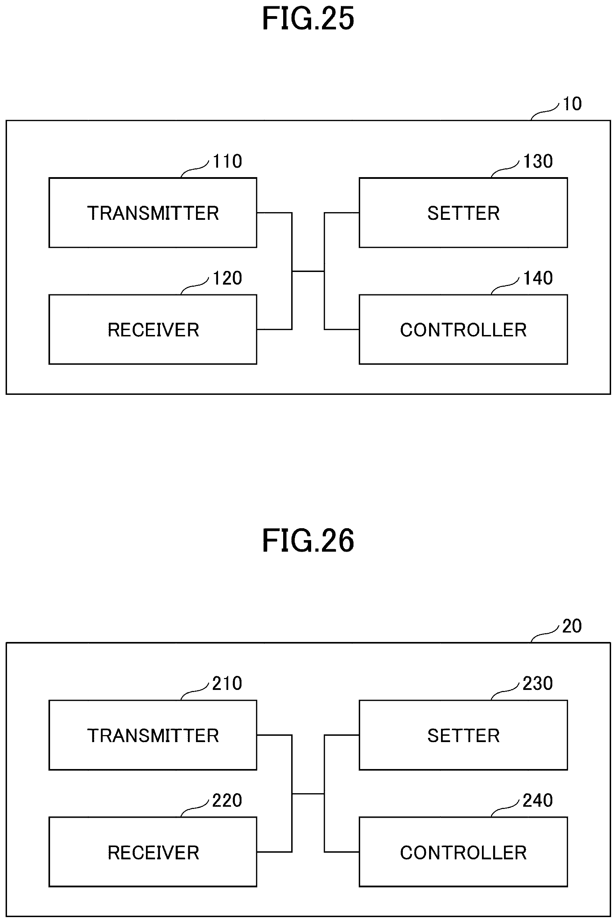

Fig. 25 is a diagram illustrating an example of a functional configuration of the base station 10. As shown in Fig. 25, the base station 10 includes a transmitter 110, a receiver 120, a setter 130, and a controller 140. The functional structure illustrated in Fig. 25 is merely an example. Functional divisions and names of functional units may be anything as long as it can perform operations according to an embodiment of the present invention.

The transmitter 110 includes a function for generating a signal to be transmitted to the terminal 20 side and transmitting the signal wirelessly. The receiver 120 includes a function for receiving various signals transmitted from the terminal 20 and acquiring, for example, information of a higher layer from the received signals. Further, the transmitter 110 has a function to transmit NR-PSS, NR-SSS, NR-PBCH, DL/UL control signals, DL reference signals, and the like to the terminal 20.

The setter 130 stores preset configuration information and various configuration information items to be transmitted to the terminal 20 in a storage device and reads the preset configuration information from the storage device if necessary. Contents of the configuration information are, for example, information related to configuration of D2D communication, etc.

As described in an embodiment, the controller 140 performs processing related to the configuration in which the terminal 20 performs D2D communication. Further, the controller 140 transmits scheduling of D2D communication and DL communication to the terminal 20 through the transmitter 110. Further, the controller 140 receives information related to the HARQ response of the D2D communication and the DL communication from the terminal 20 via the receiver 120. The functional units related to signal transmission in the controller 140 may be included in the transmitter 110, and the functional units related to signal reception in the controller 140 may be included in the receiver 120.

### <Terminal 20>

Fig. 26 is a diagram illustrating an example of a functional configuration of the terminal 20. As shown in FIG. 26, the terminal 20 includes a transmitter 210, a receiver 220, a setter 230, and a controller 240. The functional structure illustrated in Fig. 24 is merely an example. Functional divisions and names of functional units may be anything as long as it can perform operations according to an embodiment of the present invention.

The transmitter 210 generates a transmission signal from transmission data and transmits the transmission signal wirelessly. The receiver 220 receives various signals wirelessly and obtains upper layer signals from the received physical layer signals. Further, the receiver 220 has a function for receiving NR-PSS, NR-SSS, NR-PBCH, DL/UL/SL control signals, or reference signals transmitted from the base station 10. Further, for example, with respect to the D2D communications, the transmitter 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the receiver 220 receives, from the another terminal 20, PSCCH, PSSCH, PSDCH, or PSBCH.

The setter 230 stores various configuration information received from the base station 10 or the terminal 20 by the receiver 220 in the storage device and reads them from the storage device as necessary. Further, the setter 230 also stores pre-configured configuration information. Contents of the configuration information are, for example, information related to configuration of D2D communication, etc.

As described in an embodiment of the present invention, the controller 240 controls D2D communication to establish RRC connections with another terminal 20. Further, the controller 240 performs processing related to power saving operation. Further, the controller 240 performs HARQ related processing of the D2D communication and DL communication. Further, the controller 240 transmits to the base station 10 information related to the HARQ response for D2D and DL communications to the other terminal 20 scheduled by the base station 10. Further, the controller 240 may perform scheduling of D2D communication for another terminal 20. Further, the controller 240 may autonomously select resources used for D2D communication from the resource selection window based on a sensing result, or may perform reevaluation or preemption. The controller 240 also performs processing related to power saving transmission and reception in D2D communication. The controller 240 also performs processing related to interterminal coordination in D2D communication. The functional units related to signal transmission in the controller 240 may be included in the transmitter 210, and the functional units related to signal reception in the controller 240 may be included in the receiver 220.

### (Hardware structure)

In the above functional structure diagrams used for describing an embodiment of the present invention (Fig. 25 and Fig. 26), functional unit blocks are shown. The functional blocks (function units) are realized by a freely-selected combination of hardware and/or software. Further, realizing means of each functional block is not limited in particular. In other words, each functional block may be realized by a single device in which multiple elements are coupled physically and/or logically, or may be realized by two or more devices that are physically and/or logically separated and are physically and/or logically connected (e.g., wired and/or wireless). The functional blocks may be realized by combining the above-described one or more devices with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

For example, the base station 10, terminal 20, etc., according to an embodiment of the present disclosure may function as a computer for processing the radio communication method of the present disclosure. Fig. 25 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral device, a control device, a calculation device, a register, etc. For example, the above-described controller 140, controller 240, and the like, may be implemented by the processor 1001.

Further, the processor 1001 reads a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the controller 140 of the base station 10 illustrated in Fig. 25 may be realized by control programs that are stored in the storage device 1002 and are executed by the processor 1001. Further, for example, the controller 240 of the terminal 20 illustrated in Fig. 26 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiver, the transmission line interface, and the like, may be implemented by the communication device 1004. The transmitting/receiver may be physically or logically divided into a transmitter and a receiver.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the devices including the processor 1001, the storage device 1002, etc., are connected to each other via the bus 1007 used for communicating information. The bus 1007 may include a single bus, or may include different buses between the devices.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Summary of embodiments)

As described above, according to an embodiment of the present invention, a terminal is provided with a reception unit configured to receive information on resource reservation in a sensing window; a control unit configured to exclude a resource from a set of resource candidates based on RSRP (Reference Signal Received Power) when receiving the information on resource reservation and a priority included in the information on resource reservation, and to select a resource to be used for transmission from the set of resource candidates after a resource is excluded; and a transmission unit configured to perform transmission to another terminal using the selected resource, wherein the control unit is configured to further exclude a resource from the set of the resource candidates or to select a resource to be used for transmission from the set of resource candidates, based on information on uplink transmission.

According to the above configuration, in sensing-based resource identification and resource selection in sidelink, the terminal 20 considers the time domain resources used for uplink so that reliability of sidelink transmission and reception can be improved. That is, in the terminal-to-terminal direct communication, reliability of communication at the time of autonomous resource selection can be improved.

The information on uplink transmission may be information indicating a resource to be used for uplink transmission scheduled for the terminal or the other terminal. According to the configuration, in sensing-based resource identification and resource selection in sidelink, the terminal 20 considers the time domain resources used for uplink so that reliability of sidelink transmission and reception can be improved.

The control unit may be configured to exclude a resource in a time domain in which uplink transmission is performed from the set of the resource candidates based on the information on uplink transmission. According to the configuration, in sensing-based resource identification and resource selection in sidelink, the terminal 20 does not use the time domain resources used for uplink so that reliability of sidelink transmission and reception can be improved.

The control unit may be configured to exclude, from the set of resource candidates, a resource of PSCCH (Physical Sidelink Control Channel) and PSSCH (Physical Sidelink Shared Channel) corresponding to PSFCH (Physical Sidelink Feedback Channel) occasion in a time domain in which uplink transmission is performed, based on the information on uplink transmission. According to the configuration, in sensing-based resource identification and resource selection in sidelink, the terminal 20 does not use a resource of data corresponding to PSFCH where time domain resources used for uplink overlap so that reliability of sidelink transmission and reception can be improved.

The control unit may be configured to select a resource to be used for transmission from resources other than resources in a time domain in which uplink transmission is performed, in the set of resource candidates after exclusion is performed. According to the configuration, in sensing-based resource identification and resource selection in sidelink, the terminal 20 considers the time domain resources used for uplink so that reliability of sidelink transmission and reception can be improved.

According to the present embodiment of the present invention, there is provided a communication method executed by a terminal, including: receiving information on resource reservation in a sensing window; excluding a resource from a set of resource candidates based on RSRP (Reference Signal Received Power) when receiving the information on resource reservation and a priority included in the information on resource reservation, and selecting a resource to be used for transmission from the set of resource candidates after a resource is excluded; performing transmission to another terminal using the selected resource; and excluding a resource from the set of the resource candidates or to select a resource to be used for transmission from the set of resource candidates, based on information on uplink transmission.

According to the above configuration, in sensing-based resource identification and resource selection in sidelink, the terminal 20 considers the time domain resources used for uplink so that reliability of sidelink transmission and reception can be improved. That is, in the terminal-to-terminal direct communication, reliability of communication at the time of autonomous resource selection can be improved.

### (Supplement of embodiments)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the devices may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication (transmission, notification) may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another device.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission device, reception device, communication device, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include a device that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming," "expecting," or "considering," etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of nonlimiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "base on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above devices may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive OR"

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a subslot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the UE will not transmit and receive signals/channels outside the activated BWP. It should be noted that the terms "cell" and "carrier" in this disclosure may be replaced by "BWP".

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may change in various ways.

In the present disclosure, where an article is added by translation, for example "a", "an", and "the", the disclosure may include that the noun following these articles is plural.

In this disclosure, the term "A and B are different" may mean "A and B are different from each other". It should be noted that the term "A and B are different" may mean "A and B are different from C". Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

In this disclosure, SCI is an example of control information. The sensing window is an example of the first period. The selection window is an example of the second period.

As described above, the present disclosure has been described in detail. It is apparent to a person skilled in the art that the present disclosure is not limited to one or more embodiments described in the present disclosure. Modifications, alternatives, replacements, etc., of the present disclosure may be possible without departing from the subject matter and the scope of the present disclosure defined by the descriptions of claims. Therefore, the descriptions of the present specification are for illustrative purposes only, and are not intended to be limitations to the present disclosure.

### [DESCRIPTION OF THE REFERENCE NUMERALS]

- 10: Base station
- 110: Transmitter
- 120: Receiver
- 130: Setter
- 140: Controller
- 20: Terminal
- 210: Transmitter
- 220: Receiver
- 230: Setter
- 240: Controller
- 1001: Processor
- 1002: Storage device
- 1003: Auxiliary storage device
- 1004: Communication device
- 1005: Input device
- 1006: Output device

## Claims

1. A terminal comprising:
a reception unit configured to receive information on resource reservation in a sensing window;
a control unit configured to exclude a resource from a set of resource candidates based on RSRP (Reference Signal Received Power) when receiving the information on resource reservation and a priority included in the information on resource reservation, and to select a resource to be used for transmission from the set of resource candidates after a resource is excluded; and
a transmission unit configured to perform transmission to another terminal using the selected resource,
wherein the control unit is configured to further exclude a resource from the set of the resource candidates or to select a resource to be used for transmission from the set of resource candidates, based on information on uplink transmission.

2. The terminal as claimed in claim 1,
wherein the information on uplink transmission is information indicating a resource to be used for uplink transmission scheduled for the terminal or the other terminal.

3. The terminal as claimed in claim 2,
wherein the control unit is configured to exclude a resource in a time domain in which uplink transmission is performed from the set of the resource candidates based on the information on uplink transmission.

4. The terminal as claimed in claim 3,
wherein the control unit is configured to exclude, from the set of resource candidates, a resource of PSCCH (Physical Sidelink Control Channel) and PSSCH (Physical Sidelink Shared Channel) corresponding to PSFCH (Physical Sidelink Feedback Channel) occasion in a time domain in which uplink transmission is performed, based on the information on uplink transmission.

5. The terminal as claimed in claim 2,
wherein the control unit is configured to select a resource to be used for transmission from resources other than resources in a time domain in which uplink transmission is performed, in the set of resource candidates after exclusion is performed.

6. A communication method executed by a terminal, comprising:
receiving information on resource reservation in a sensing window;
excluding a resource from a set of resource candidates based on RSRP (Reference Signal Received Power) when receiving the information on resource reservation and a priority included in the information on resource reservation, and selecting a resource to be used for transmission from the set of resource candidates after a resource is excluded;
performing transmission to another terminal using the selected resource; and
excluding a resource from the set of the resource candidates or selecting a resource to be used for transmission from the set of resource candidates, based on information on uplink transmission.
